# EUROPEAN PATENT SPECIFICATION

(11) **EP 4 134 338 B1**
(45) Date of publication and mention of the grant of the patent: **29.05.2024**
(21) Application number: 22158377.6
(22) Date of filing: 24.02.2022
(51) Int. Cl.: B65G 1/14, B60P 7/12, B60P 7/08

(54) **REUSABLE PIPE SUPPORT APPARATUS**
WIEDERVERWENDBARE STÜTZVORRICHTUNG FÜR ROHRE
APPAREIL DE SUPPORT DE TUYAU RÉUTILISABLE

(30) Priority: 10.08.2021 DK PA202100796
(43) Date of publication of application: 15.02.2023
(73) Proprietor: Pro-Pipe Energy ApS, 6800 Varde (DK)
(72) Inventor: Voerts, Jon, 6800 Varde (DK)
(74) Representative: Sun, Yiming

(56) References cited:
- DE-B- 1 051 738
- DE-C1- 3 303 323
- US-A- 3 747 780
- US-A1- 2017 129 691
- US-B1- 6 550 741

## Description

### CROSS REFERENCE TO RELATED APPLICATION

The present application claims the benefit of Danish Patent Application Number PA202100796 filed August 10, 2021.

### BACKGROUND OF THE INVENTION

### A. Technical field

The invention disclosed herein generally relates to a pipe support apparatus. More particularly, the present invention relates to a reusable pipe support apparatus configured to protect the pre-insulated district steel pipes against pressure damages during storage, loading, transit, and unloading and also withstand the pressure, shocks, and stresses normally encountered during transit.

### B. Description of related art

District heating system is used for distributing heat generated in a centralized location through insulated pipes for residential and commercial heating requirements such as space heating and water heating. The district heating pipes are pre-insulated pipes, which are used for distributing generated heat or water for residential and commercial requirements. These pipes are laid underground for transporting energy and also for supplying hot water in buildings via a network of preinstalled pipes. The district heating system employs a steel pipe insulated by foam insulation and an outer plastic jacket. They are either a single steel pipe or a double steel pipe embedded in the polyurethane foam insulation. In the end, the pipes are sealed using a plastic closure on each end. These insulated pipes are configured to direct placement in the ground for district heating.

Most of the steel pipes used in pipeline networks are transported in the form of a stake or prepackaged bundles using trucks, trailers, railcars, and ships, etc. The steel pipes are secured on the truck or trailer by placing on wooden dunnages along the length of the pipe and then hoisting the lengths of pipe into the trailer and depositing them in a tier fashion on the wooden dunnages. This creates space between each pipe, which makes it easier to unload the steel pipes from the trailer. Further, triangular wooden blocks/wedges of various sizes were then inserted at along the sides of each steel pipe and nailed to the wooden dunnages. The triangular wooden blocks/wedges prevent lateral shifting and chafing of the pipes, in transit on the roads and also prevent any pipe from rolling off the trailer. After the load was tied together with a strap or flat band steel strapping which was wrapped around the load at intervals along its length.

However, when transporting these steel pipes in several layers using these wooden dunnages or timbers and triangular wooden blocks/wedges of various sizes, the lower pipes are exposed to a relatively large pressure, which creates permanent damage to the steel pipes which are located in the lower layers. These wooden dunnages or timbers and triangular wooden blocks/wedges do not reduce the weight pressure from the actual weight of district heating pipes which are located on top. This typically causes pressure damages, etc., which is contrary to today's standard EN 253. Often it is necessary to protect the steel pipes against damages during storage, loading, transit, and unloading the steel pipes. The damage is typically first discovered in connection with receiving control out in the field, where the pre-insulated district heating pipes must be quality checked for pressure damage in accordance with EN 253 and the pipe must be checked for deep scratches.

In addition, it is not insignificant and persistent consumption of wood in the transportation of steel pipes when considering how many pre-insulated steel pipes are transported and stored worldwide. Conversely, the wooden dunnages or timbers and triangular wooden blocks/wedges are not too light so they blow around the storage spaces in windy weather.

A prior art, US 3747780 A of Schneider*,* discloses a pipe support apparatus suitable for supporting and protecting pre-insulated district steel pipes during transit and storage. The pre-insulated district steel pipes are transported in the form of a stake or prepackaged bundles using a trailer provided with a trailer bed. Further, the pipe support apparatus comprising: a base having a first end and a second end, an anti-skid wedge securely affixed on both top and bottom sides at the first end and the second end of the base, wherein the pipe support apparatus is configured to be disposed at equal distances along the length of each pre-insulated district steel pipe. However, above-mentioned prior art fails to teach about a pair of anti-skid wedges, which are used on both top and bottom sides at the first end and the second end of the base and in that they are adhesively affixed to the base, and in that at least one shock absorbing pad is adhesively affixed to both top and bottom sides of the base and the pair of anti-skid wedges, respectively.

Document DE 33 03 323 C1 describes a pipe support apparatus which is similar to that defined by the preamble of claim 1.

In light of the above-mentioned drawbacks, there is a need for a reusable pipe support apparatus configured to protect the pre-insulated district steel pipes against pressure damages during storage, loading, transit, and unloading and also withstand the pressure, shocks, and stresses normally encountered during transit.

### SUMMARY OF THE INVENTION

The invention is set out in the appended set of claims.

The present invention discloses a pipe support apparatus, configured to support and protect the pre-insulated pipes during transit and storage. The pre-insulated pipes are transported in the form of a stake or prepackaged bundles using trucks, trailers, railcars, and ships, etc. In one embodiment, the pre-insulated pipes are secured on the truck or a trailer bed in a tier fashion by placing them on the pipe support apparatus, which are disposed at equal distances along the length of each pre-insulated pipe. This creates space between each pre-insulated pipe, which makes it easier to unload the pipes from the truck or trailer bed.

In one embodiment, the pipe support apparatus comprises at least two sections, which are securely and adhesively fastened to each other. In one embodiment, the pipe support apparatus is configured to prevent pressure damages to the pre-insulated pipes, which are located in the lower layers during transit, thereby securely and safely transporting and storing the pre-insulated pipes.

According to the invention, the pipe support apparatus comprises a base or a pressure plank having a first end and a second end, a pair of anti-skid wedges, and at least one shock absorbing pad. According to the invention, the pair of anti-skid wedges is securely and adhesively affixed on both top and bottom sides at the first end and the second end of the base. In one embodiment, the shock absorbing pad is adhesively affixed to both top and bottom sides of the base and the pair of anti-skid wedges, respectively.

In one embodiment, the pipe support apparatus will be able to adapt automatically to any pipe dimension to be supported by the pipe itself sinking into place in the shock absorbing pad or flexible foam pad. The shock absorbing pad has such a density that it is automatically restored after use whereby the pipe support apparatus could be used again and again until they become worn or defective for another reason. In one embodiment, the pipe support apparatus could make a significant difference measured in CO₂ emissions by recycling it and combined with the increased quality according to EN 253 by eliminating pressure damages. The pipe support apparatus must be reusable for number of times before they can be recycled. In one embodiment, the pipe support apparatus have a weight which makes them easier to handle manually than the heavy wooden blocks of about 2 meters handle today. Conversely, the pipe support apparatus is not too light so they blow around the storage spaces in windy weather. In relation to HSE (health, environment, and safety) elements, warning signs will be mounted on each end of the pipe support apparatus. This is to draw attention to the fact that there is a certain risk associated with pipes that are stacked at a height of up to 2 meters. The reflex signs are installed which could be seen in the dark when the stored district heating pipes are located along roads and cycle paths in connection with construction projects. The pipe support apparatus is configured to adapt for standard width on a truck trailer or ship, etc. which transports district heating pipes ex works to projects worldwide.

In one embodiment, the base is configured to provide support for the pre-insulated district steel pipes. In one embodiment, the base is further configured to stabilize the pre-insulated pipes during transit and storage at construction site and also increase impact surface, thereby preventing damages to an insulation sheath of the pre-insulated pipes.

In one embodiment, the anti-skid wedges are configured to securely and adhesively affixed on both top and bottom sides at the first end and the second end of the base. In one embodiment, the anti-skid wedges are configured to prevent lateral shifting and chafing of the pre-insulated pipes during transit and storage. In one embodiment, the anti-skid wedges are configured to prevent the pre-insulated pipes from slipping and rolling off the truck or trailer bed during transit. In one embodiment, the anti-skid wedges could be, but not limited to, triangular wooden anti-skid wedges.

In one embodiment, the shock absorbing pad is configured to absorb shocks and stresses and also withstand the pressure normally encountered during transit, thereby supporting and protecting the pre-insulated district steel pipes against pressure damages and scratches during storing, loading, transit, and unloading from the trailer bed. In one embodiment, the shock absorbing pad has a first end, a second end, and a top surface, wherein the top surface is downwardly tapered at both first end and second end to form a sloping surface, thereby accurately positioning the shock absorbing pad on both top and bottom sides of the base and the pair of anti-skid wedges. In one embodiment, the shock absorbing pad is configured to automatically adapt to the dimension of the pre-insulated pipe, which lays on the pipe support apparatus and also automatically restore itself whereby it is configured to be used for multiple times. In one embodiment, the shock absorbing pad could be, but not limited to, foam pads. When the pre-insulated pipe is removed again, the shock absorbing pad automatically restores itself whereby it can be used again and again. This achieves a quality improvement and approved quality requirements according to EN 253.

Other objects, features and advantages of the present invention will become apparent from the following detailed description.

### BRIEF DESCRIPTION OF THE DRAWINGS

The foregoing summary, as well as the following detailed description of the invention, is better understood when read in conjunction with the appended drawings.
**FIG. 1** exemplarily illustrates a perspective view of a reusable pipe support apparatus used for supporting and protecting pre-insulated district steel pipes during transit and storage in an embodiment of the present invention.
**FIG. 2** exemplarily illustrates a side perspective view of the reusable pipe support apparatus in one embodiment of the present invention.
**FIG. 3** exemplarily illustrates a front view of the reusable pipe support apparatus in one embodiment of the present invention.
**FIG. 4** exemplarily illustrates a top view of the reusable pipe support apparatus in one embodiment of the present invention.
**FIG. 5** exemplarily illustrates a side view of the reusable pipe support apparatus in one embodiment of the present invention.
**FIG. 6** exemplarily illustrates a perspective view of a base or pressure plank of the reusable pipe support apparatus in one embodiment of the present invention.
**FIG. 7** exemplarily illustrates a top view of the base of the reusable pipe support apparatus in one embodiment of the present invention.
**FIG. 8** exemplarily illustrates a side view of the base of the reusable pipe support apparatus in one embodiment of the present invention.
**FIG. 9** exemplarily illustrates a perspective view of an anti-skid wedge of the reusable pipe support apparatus in one embodiment of the present invention.
**FIG. 10** exemplarily illustrates a side view of an anti-skid wedge of the reusable pipe support apparatus in one embodiment of the present invention.
**FIG. 11** exemplarily illustrates a top view of the anti-skid wedge of the reusable pipe support apparatus in one embodiment of the present invention.
**FIG. 12** exemplarily illustrates a rear view of the anti-skid wedge of the reusable pipe support apparatus in one embodiment of the present invention.
**FIG. 13** exemplarily illustrates a perspective view of a shock absorbing pad of the reusable pipe support apparatus in one embodiment of the present invention.
**FIG. 14** exemplarily illustrates a top view of the shock absorbing pad of the reusable pipe support apparatus in one embodiment of the present invention.
**FIG. 15** exemplarily illustrates a side view of the shock absorbing pad of the reusable pipe support apparatus in one embodiment of the present invention.
**FIG. 16** exemplarily illustrates a perspective view of the reusable pipe support apparatus in another embodiment of the present invention.
**FIG. 17** exemplarily illustrates an exploded view of the reusable pipe support apparatus in another embodiment of the present invention.
**FIG. 18** exemplarily illustrates a side perspective view of the reusable pipe support apparatus in another embodiment of the present invention.
**FIG. 19** exemplarily illustrates a side view of the reusable pipe support apparatus in another embodiment of the present invention.
**FIG. 20** exemplarily illustrates a top view of the reusable pipe support apparatus in another embodiment of the present invention.

### DETAILED DESCRIPTION OF EMBODIMENTS

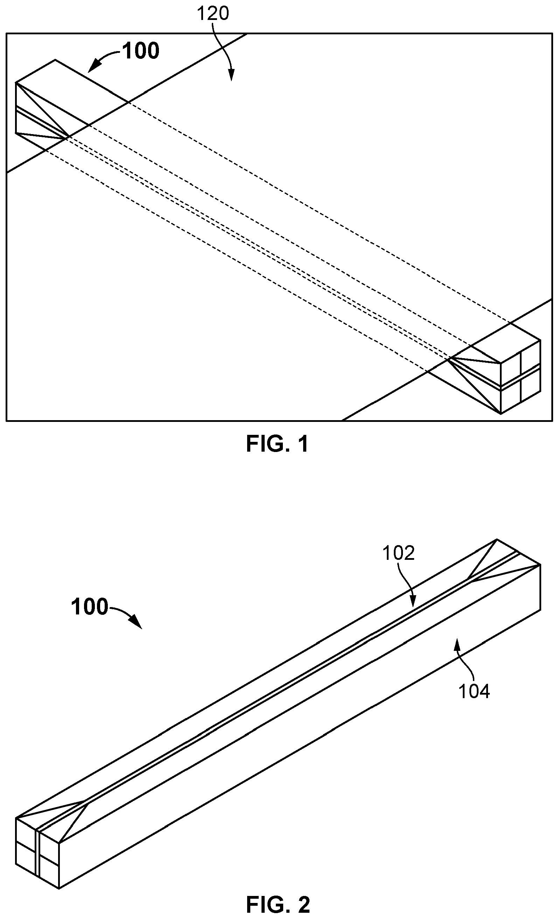

Referring to **FIG. 1****,** a reusable pipe support apparatus **100** used for supporting and protecting pre-insulated district steel pipes **120** during transit and storage in one embodiment is disclosed. In one embodiment, the pipe support apparatus **100** is configured to support and protect the pre-insulated pipes **120** during transit and storage. The pre-insulated pipes **120** are transported in the form of a stake or prepackaged bundles using trucks, trailers, railcars, and ships, etc. In one embodiment, the pre-insulated pipes 120 are secured on the truck or a trailer bed in a tier fashion by placing them on the pipe support apparatus 100, which are disposed at equal distances along the length of each pre-insulated pipe 120. This creates space between each pre-insulated pipe 120, which makes it easier to unload the pipes from the truck or trailer bed.

Referring to **FIG. 2****,** a side perspective view of the reusable pipe support apparatus 100 according to one embodiment is disclosed. In one embodiment, the pipe support apparatus **100** comprises at least two sections (**102** and **104**), which are securely and adhesively fastened to each other. In one embodiment, the pipe support apparatus **100** is configured to prevent pressure damages to the pre-insulated pipes **120,** which are located in the lower layers during transit, thereby securely and safely transporting and storing the pre-insulated pipes **120.**

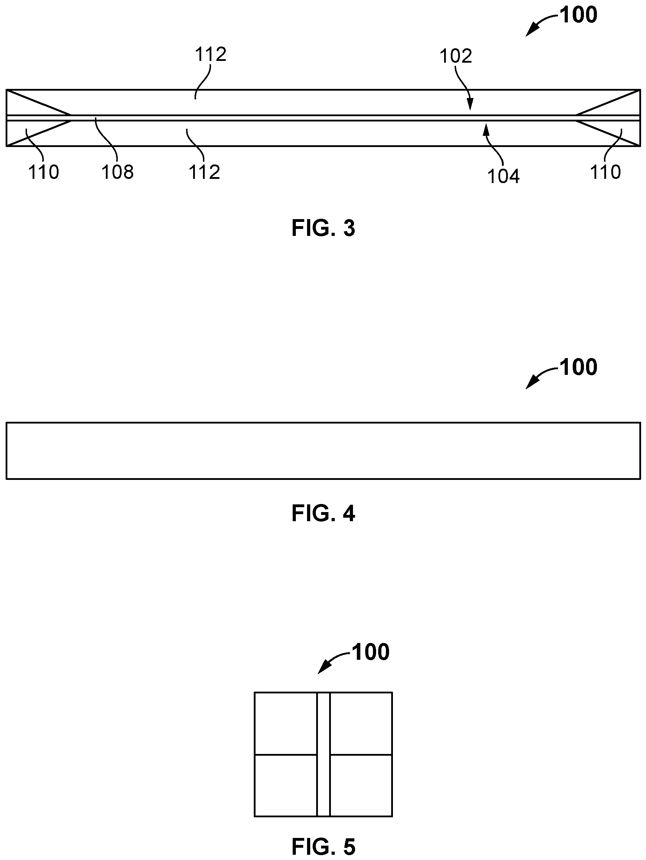

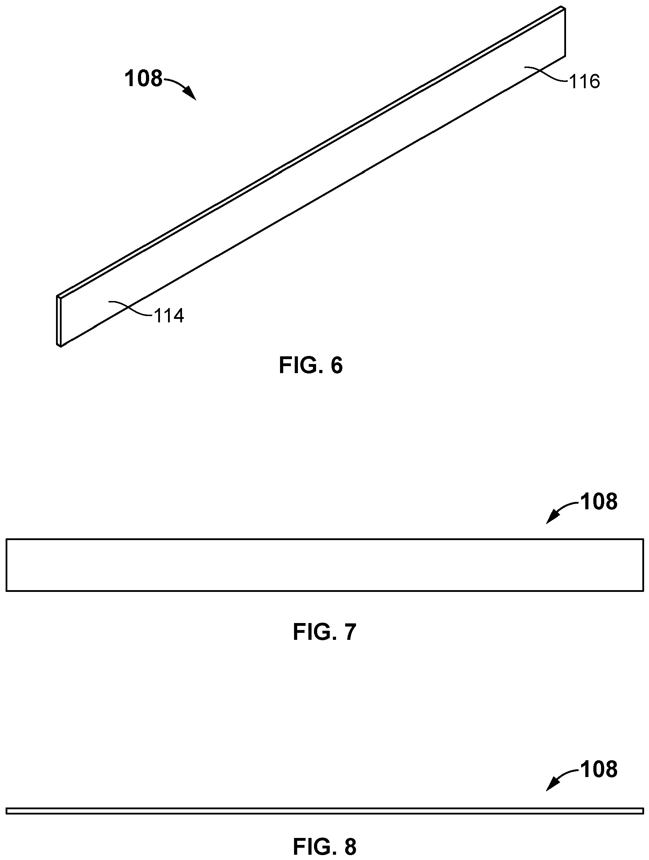

Referring to **FIGs. 3-5****,** the reusable pipe support apparatus **100** according to one embodiment is disclosed. In one embodiment, the pipe support apparatus **100** comprises a base or a pressure plank **108** having a first end **114** (shown in **FIG. 6**) and a second end **116** (shown in **FIG. 6**), a pair of anti-skid wedges **110,** and at least one shock absorbing pad **112.** In one embodiment, the pair of anti-skid wedges **110** is securely and adhesively affixed on both top and bottom sides at the first end **114** and the second end **116** of the base **108.** In one embodiment, the shock absorbing pad **112** is adhesively affixed to both top and bottom sides of the base **108** and the pair of anti-skid wedges **110,** respectively.

In one embodiment, the pipe support apparatus **100** will be able to adapt automatically to any pipe dimension to be supported by the pipe itself sinking into place in the shock absorbing pad or flexible foam pad **112.** The shock absorbing pad **112** has such a density that it is automatically restored after use whereby the pipe support apparatus **100** could be used again and again until they become worn or defective for another reason. In one embodiment, the pipe support apparatus **100** could make a significant difference measured in CO₂ emissions by recycling it and combined with the increased quality according to EN 253 by eliminating pressure damages. The pipe support apparatus **100** must be reusable for number of times before they can be recycled. In one embodiment, the pipe support apparatus **100** have a weight which makes them easier to handle manually than the heavy wooden blocks of about 2 meters handle today. Conversely, the pipe support apparatus **100** is not too light so they blow around the storage spaces in windy weather. In relation to HSE (health, environment, and safety) elements, warning signs will be mounted on each end of the pipe support apparatus **100.** This is to draw attention to the fact that there is a certain risk associated with pipes that are stacked at a height of up to 2 meters. The reflex signs are installed which could be seen in the dark when the stored district heating pipes **120** are located along roads and cycle paths in connection with construction projects. In one embodiment, the pipe support apparatus **100** could protect storage and transport of pre-insulated pipes **120,** which prevent pressure damages according to EN 253 (as well as possible protection of coated offshore steel pipes). The pipe support apparatus **100** is configured to adapt for standard width on a truck trailer or ship, etc. which transports district heating pipes ex works to projects worldwide.

Referring to **FIGs. 6-8****,** the base or pressure plank **108** of the pipe support apparatus **100** according to one embodiment is disclosed. In one embodiment, the base **108** is configured to provide support for the pre-insulated district steel pipes **120.** In one embodiment, the base **108** is further configured to stabilize the pre-insulated pipes **120** during transit and storage at construction site and also increase impact surface, thereby preventing damages to an insulation sheath of the pre-insulated pipes **120.**

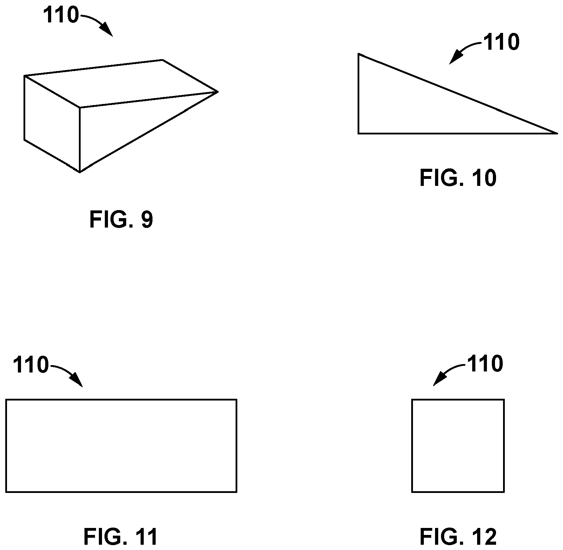

Referring to **FIGs. 9-12****,** the anti-skid wedge **110** of the pipe support apparatus **100** according to one embodiment is disclosed. In one embodiment, the anti-skid wedges **110** are configured to securely and adhesively affixed on both top and bottom sides at the first end **114** and the second end **116** of the base **108.** In one embodiment, the anti-skid wedges **110** are configured to prevent lateral shifting and chafing of the pre-insulated pipes **120** during transit and storage. In one embodiment, the anti-skid wedges **110** are configured to prevent the pre-insulated pipes **120** from slipping and rolling off the truck or trailer bed during transit. In one embodiment, the anti-skid wedges **110** could be, but not limited to, triangular wooden anti-skid wedges.

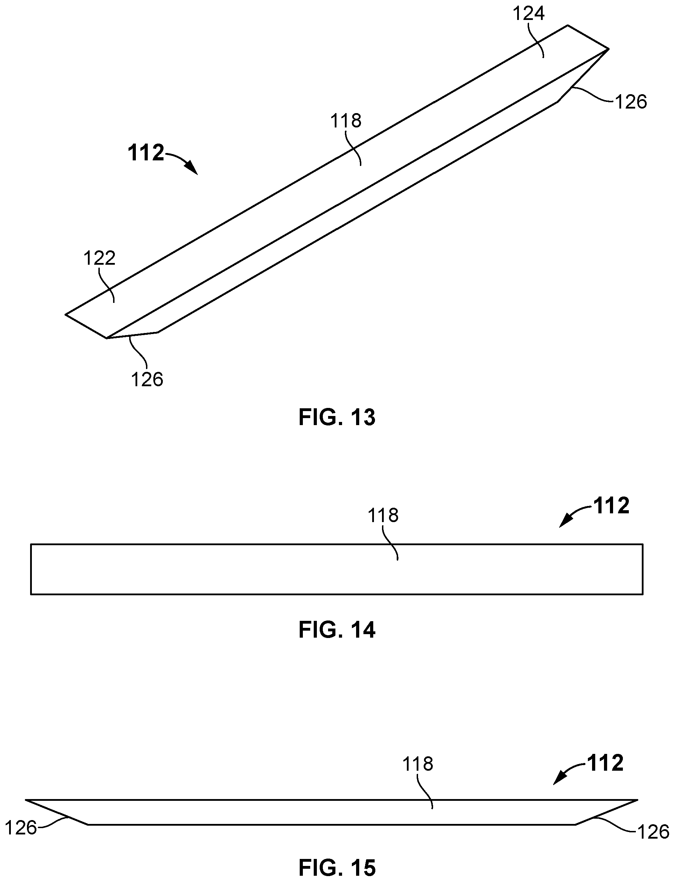

Referring to **FIGs. 13-15****,** the shock absorbing pad **112** of the pipe support apparatus **100** according to one embodiment is disclosed. In one embodiment, the shock absorbing pad **112** are configured to absorb shocks and stresses and also withstand the pressure normally encountered during transit, thereby supporting and protecting the pre-insulated district steel pipes **120** against pressure damages and scratches during storing, loading, transit, and unloading from the trailer bed. In one embodiment, the shock absorbing pad **112** having a first end **122,** a second end **124,** and a top surface **118,** wherein the top surface **118** is downwardly tapered at both first end **122** and second end **124** to form a sloping surface **126,** thereby accurately positioning the shock absorbing pad **112** on both top and bottom sides of the base **108** and the pair of anti-skid wedges **110.** In one embodiment, the shock absorbing pad **112** is configured to automatically adapt to the dimension of the pre-insulated pipe **120,** which lays on the pipe support apparatus **100** and also automatically restore itself whereby it is configured to be used for multiple times. In one embodiment, the shock absorbing pad **112** could be, but not limited to, foam pads. When the pre-insulated pipe **120** is removed again, the shock absorbing pad **112** automatically restores itself whereby it can be used again and again. This achieves a quality improvement and approved quality requirements according to EN 253.

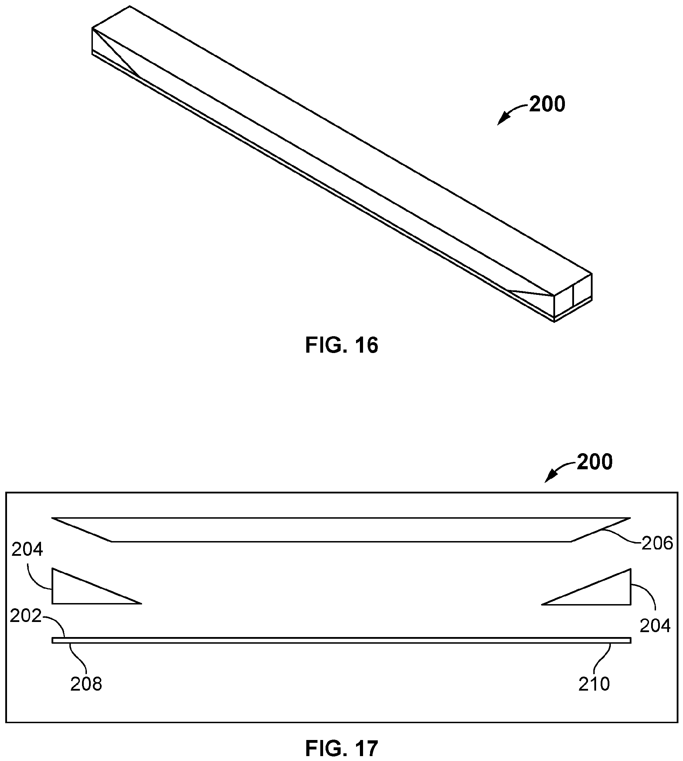

Referring to **FIG. 16****,** the pipe support apparatus **200** according to another embodiment of the present invention is disclosed. In one embodiment, the pipe support apparatus **200** is configured to support and protect the pre-insulated pipes **120** during transit and storage. In one embodiment, the pre-insulated pipes **120** are secured on the truck or a trailer bed in a tier fashion by placing them on the pipe support apparatus **200,** which are disposed at equal distances along the length of each pre-insulated pipe **120.**

Referring to **FIG. 17****,** an exploded view of the pipe support apparatus **200** according to another embodiment of the present invention is disclosed. In one embodiment, the pipe support apparatus **200** comprises a base or a pressure plank **202** having a first end **208** and a second end **210,** a pair of anti-skid wedges **204,** and at least one shock absorbing pad **206.** In one embodiment, the pair of anti-skid wedges **204** is securely and adhesively affixed on the top at both first end **208** and the second end **210** of the base **202.** In one embodiment, the shock absorbing pad **206** is adhesively affixed to the top of the base **202** and the pair of anti-skid wedges **204,** respectively. The shock absorber pad **206** assumes automatic shape according to pre-insulated pipe dimensions. The properties of the memory cause the shock absorbing pad **206** to assume its original shape when the pipe support is not in use for recycling.

In one embodiment, the anti-skid wedges **204** are securely and adhesively affixed on the top at both first end **208** and the second end **210** of the base **202** using an adhesive, for example, wood glue. In one embodiment, the anti-skid wedges **204** are screwed into the base **202.** Further, the shock absorbing pad **206** is adhesively affixed the top of the base **202** and the pair of anti-skid wedges **204,** respectively, using an adhesive, for example, wood glue. In one embodiment, the pipe support apparatus **100** further comprises safety reflexes, which are screwed on the end portions of the pipe support apparatus **100.** In one embodiment, the pipe support apparatus **100** further comprises a logo or a sign related to an organization or company.

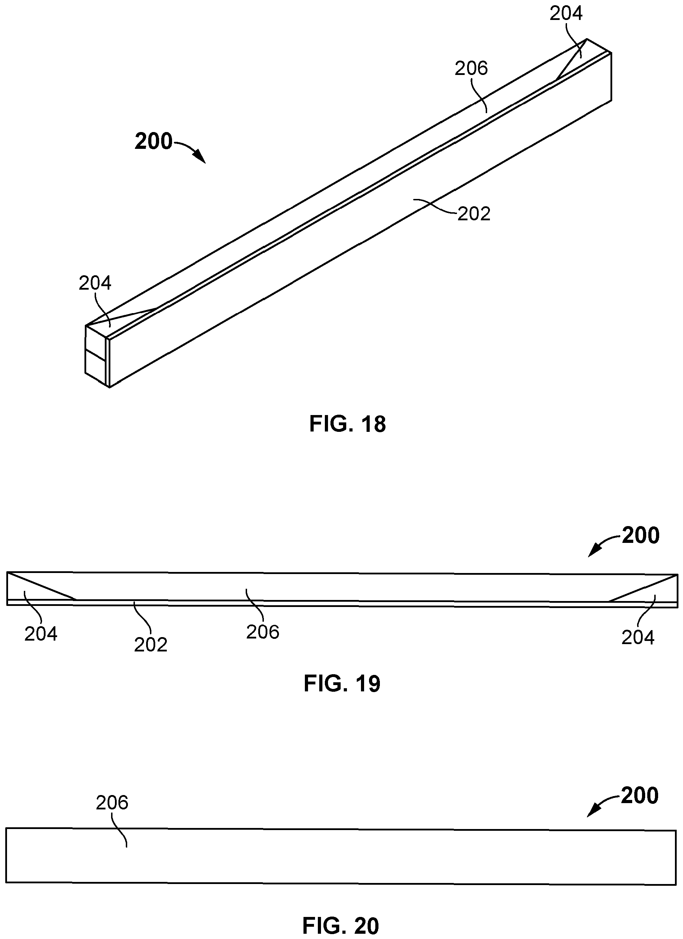

Referring to **FIGs. 18-20****,** the pipe support apparatus **200** according to another embodiment of the present invention is disclosed. In one embodiment, the base **108** is configured to provide support for the pre-insulated district steel pipe **120.** In one embodiment, the base **202** is further configured to stabilize the pre-insulated district steel pipe **120** during storage and transit and also increase impact surface, thereby preventing damages to the pre-insulated district steel pipe **120.** In one embodiment, the anti-skid wedges **204** are configured to prevent lateral shifting and chafing of the pre-insulated district steel pipes during transit and storage and also prevent the pre-insulated pipes **120** from slipping and rolling off the trailer during transit. In one embodiment, the shock absorbing pad **206** is configured to automatically adapt to the dimension of the pre-insulated district steel pipe **120,** which lays on the pipe support apparatus **100** and also automatically restore itself whereby it is configured to be used for multiple times.

The surface conditions at delivery include the surface flattening of the pipe assembly shall not exceed 15% of the insulation thickness measured from the original surface. Scratches in the casing from the handling and the storage shall not exceed 10% of the original wall thickness of the casing. On casings with a wall thickness exceeding 10 mm scratches shall not be deeper than 1 mm.

## Claims

1. A pipe support apparatus (100) for supporting and protecting pre-insulated district steel pipes (120) during transit and storage, wherein the pre-insulated district steel pipes (120) are transported in the form of a stake or prepackaged bundles using a trailer provided with a trailer bed, the pipe support apparatus (100) comprising:
a base (108) having a first end (114) and a second end (116);
at least one shock absorbing pad (112),
wherein the shock absorbing pad (112) is configured to absorb shocks and stresses and to withstand the pressure normally encountered during transit, thereby supporting and protecting the pre-insulated district steel pipes (120) against pressure damages and scratches during storing, loading, transit, and unloading from the trailer bed,
wherein the pipe support apparatus (100) includes a pair of anti-skid wedges (110) securely affixed on both top and bottom sides and bottom sides at the first end (114) and the second end (116) of the base (108), **characterized in that**
the anti-skid wedges (110) are adhesively affixed on the top and bottom sides of the base
and at least one shock absorbing pad (112) is adhesively affixed to both top and bottom sides of the base (108) and the pair of anti-skid wedges (110), respectively; and
each shock absorbing pad (112) has a first end (122), a second end (124), and a top surface (118), wherein the top surface (118) is downwardly tapered at both first end (122) and second end (124) to form a sloping surface (126), thereby accurately positioning the shock absorbing pad (112) on both top sides and bottom sides of the base (108) and the pair of anti-skid wedges (110).

2. The pipe support apparatus (100) of claim 1, wherein the base (108) is configured to provide support for the pre-insulated district steel pipe (120).

3. The pipe support apparatus (100) of claim 1, wherein the base (108) is configured to stabilize the pre-insulated district steel pipe (120) during storage and transit, and increase impact surface, thereby preventing damages to the pre-insulated district steel pipe (120).

4. The pipe support apparatus (100) of claim 1, wherein the pair of anti-skid wedges (110) is configured to prevent lateral shifting and chafing of the pre-insulated district steel pipes during transit and storage.

5. The pipe support apparatus (100) of claim 1, wherein the pair of anti-skid wedges (110) is configured to prevent the pre-insulated district steel pipes (120) from slipping and rolling off the trailer during transit.

6. The pipe support apparatus (100) of claim 1, wherein the anti-skid wedges (110) are triangular wooden anti-skid wedges.

7. The pipe support apparatus (100) of claim 1, wherein the shock absorbing pad (112) is a foam pad.

8. The pipe support apparatus (100) of claim 1, wherein the shock absorbing pad (112) is configured to automatically adapt to the dimension of the pre-insulated district steel pipe (120), which lays on the pipe support apparatus (100), and automatically restore itself whereby it is configured to be used for multiple times.

## Patentansprüche

1. Rohrhalterungsvorrichtung (100) zum Abstützen und Schützen von vorisolierten Fernwärmestahlrohren (120) während des Transports und der Lagerung, wobei die vorisolierten Fernwärmestahlrohre (120) in Form eines Pfahls oder vorverpackter Bündel mittels eines Anhängers, der mit einer Anhängerladefläche versehen ist, transportiert werden, wobei die Rohrhalterungsvorrichtung (100) aufweist:
eine Basis (108), die ein erstes Ende (114) und ein zweites Ende (116) aufweist;
mindestens ein stoßdämpfendes Kissen (112),
wobei das stoßdämpfende Kissen (112) dazu ausgebildet ist, Stöße und Belastungen aufzufangen und dem für gewöhnlich während des Transports auftretenden Druck standzuhalten und somit die vorisolierten Fernwärmestahlrohre (120) abzustützen und während des Lagerns, Aufladens, Transports und Abladens von der Anhängerladefläche vor Druckschäden und Kratzspuren zu schützen,
wobei die Rohrhalterungsvorrichtung (100) aufweist:
ein Paar von Antirutschkeilen (110), die an dem ersten Ende (114) und dem zweiten Ende (116) sicher an sowohl der oberen als auch der unteren Seite der Basis (108) befestigt sind, **dadurch gekennzeichnet, dass**
die Antirutschkeile (110) an der oberen und der unteren Seite der Basis klebebefestigt sind und mindestens ein stoßdämpfendes Kissen (112) an sowohl der oberen als auch der unteren Seite der Basis (108) bzw. des Paares von Antirutschkeilen (110) klebebefestigt ist; und
jedes stoßdämpfende Kissen (112) ein erstes Ende (122), ein zweites Ende (124) und eine obere Oberfläche (118) aufweist, wobei die obere Oberfläche (118) sowohl an dem ersten Ende (122) als auch an dem zweiten Ende (124) nach unten verjüngt ist, um eine schräge Oberfläche (126) zu bilden und dadurch das stoßdämpfende Kissen (112) präzise an sowohl der oberen Seite als auch der unteren Seite der Basis (108) und des Paares von Antirutschkeilen (110) zu positionieren.

2. Rohrhalterungsvorrichtung (100) nach Anspruch 1, wobei die Basis (108) dazu ausgebildet ist, Abstützung für das vorisolierte Fernwärmestahlrohr (120) bereitzustellen.

3. Rohrhalterungsvorrichtung (100) nach Anspruch 1, wobei die Basis (108) dazu ausgebildet ist, das vorisolierte Fernwärmestahlrohr (120) während der Lagerung und des Transports zu stabilisieren und die Aufprallfläche zu vergrößern und dadurch eine Beschädigung des vorisolierten Fernwärmestahlrohres (120) zu verhindern.

4. Rohrhalterungsvorrichtung (100) nach Anspruch 1, wobei das Paar von Antirutschkeilen (110) dazu ausgebildet ist, seitliches Verschieben und Scheuern der vorisolierten Fernwärmestahlrohre während des Transports und der Lagerung zu verhindern.

5. Rohrhalterungsvorrichtung (100) nach Anspruch 1, wobei das Paar von Antirutschkeilen (110) dazu ausgebildet ist, zu verhindern, dass die vorisolierten Fernwärmestahlrohre (120) während des Transports von dem Anhänger herabrutschen oder herabrollen.

6. Rohrhalterungsvorrichtung (100) nach Anspruch 1, wobei die Antirutschkeile (110) dreieckige hölzerne Antirutschkeile sind.

7. Rohrhalterungsvorrichtung (100) nach Anspruch 1, wobei das stoßdämpfende Kissen (112) ein Schaumstoffkissen ist.

8. Rohrhalterungsvorrichtung (100) nach Anspruch 1, wobei das stoßdämpfende Kissen (112) dazu ausgebildet ist, sich automatisch an die Größe des vorisolierten Fernwärmestahlrohres (120), welches auf der Rohrhalterungsvorrichtung (100) liegt, anzupassen und sich automatisch rückzuverformen, wodurch es dazu ausgebildet ist, mehrmals verwendet zu werden.

## Revendications

1. Dispositif de support de tuyaux (100) destiné à supporter et à protéger des tuyaux en acier urbains pré-isolés (120) pendant le transport et le stockage, dans lequel les tuyaux en acier urbains pré-isolés (120) sont transportés sous la forme d'un pieu ou de faisceaux pré-isolés à l'aide d'une remorque dotée d'un lit de remorque, le dispositif de support de tuyaux (100) comprenant :
une base (108) présentant une première extrémité (114) et une deuxième extrémité (116) ;
au moins un coussinet amortisseur de chocs (112),
dans lequel le coussinet amortisseur de chocs (112) est configuré pour absorber des chocs et des tensions et pour résister à la pression rencontrée normalement pendant le transport, supportant ainsi les tuyaux en acier urbains pré-isolés (120) tout en les protégeant contre des dommages et des rayures dus à la pression pendant le stockage, le chargement, le transport et le déchargement du lit de remorque,
dans lequel le dispositif de support de tuyaux (100) inclut
une paire de cales antidérapantes (110) fixées solidement à la fois aux côtés supérieur et inférieur à la première extrémité (114) et à la deuxième extrémité (116) de la base (108), **caractérisé en ce que**
les cales antidérapantes (110) sont fixées de façon adhésive aux côtés supérieur et inférieur de la base et au moins un coussinet amortisseur de chocs (112) est fixé de façon adhésive à la fois aux côtés supérieur et inférieur de la base (108) et à la paire de cales antidérapantes (110), respectivement ; et
chaque coussinet amortisseur de chocs (112) présente une première extrémité (122), une deuxième extrémité (124) et une surface supérieure (118), dans lequel la surface supérieure (118) est effilée vers le bas à la fois à la première extrémité (122) et à la deuxième extrémité (124) pour former une surface inclinée (126), positionnant ainsi correctement le coussinet amortisseur de chocs (112) sur les deux côtés supérieurs et côtés inférieurs de la base (108) et la paire de cales antidérapantes (110).

2. Dispositif de support de tuyaux (100) selon la revendication 1, dans lequel la base (108) est configurée pour fournir un support pour le tuyau en acier urbain pré-isolé (120).

3. Dispositif de support de tuyaux (100) selon la revendication 1, dans lequel la base (108) est configurée pour stabiliser le tuyau en acier urbain pré-isolé (120) pendant le stockage et le transport, et pour augmenter la surface d'impact, empêchant ainsi l'endommagement du tuyau en acier urbain pré-isolé (120).

4. Dispositif de support de tuyaux (100) selon la revendication 1, dans lequel la paire de cales antidérapantes (110) est configurée pour empêcher un déplacement latéral et un frottement des tuyaux en acier urbains pré-isolés pendant le transport et le stockage.

5. Dispositif de support de tuyaux (100) selon la revendication 1, dans lequel la paire de cales antidérapantes (110) est configurée pour empêcher les tuyaux en acier urbains pré-isolés (120) de glisser et de tomber de la remorque pendant le transport.

6. Dispositif de support de tuyaux (100) selon la revendication 1, dans lequel les cales antidérapantes (110) sont des cales antidérapantes en bois triangulaires.

7. Dispositif de support de tuyaux (100) selon la revendication 1, dans lequel le coussinet amortisseur de chocs (112) est un coussinet en mousse.

8. Dispositif de support de tuyaux (100) selon la revendication 1, dans lequel le coussinet amortisseur de chocs (112) est configuré pour s'adapter automatiquement aux dimensions du tuyau en acier urbain pré-isolé (120), lequel repose sur le dispositif de support de tuyaux (100), et pour reprendre sa forme automatiquement, étant ainsi configuré pour être utilisé plusieurs fois.
